# EUROPEAN PATENT SPECIFICATION

(11) **EP 2 893 829 B1**
(45) Date of publication and mention of the grant of the patent: **06.02.2019**
(21) Application number: 12884291.1
(22) Date of filing: 06.09.2012
(51) Int. Cl.: C08J 5/10, A44B 19/24

(54) **MOLDED COMPONENT FOR SLIDE FASTENERS AND SLIDE FASTENER PROVIDED THEREWITH**
FORMTEIL FÜR REISSVERSCHLÜSSE UND REISSVERSCHLUSS DAMIT
COMPOSANT MOULÉ POUR FERMETURES À GLISSIÈRE ET FERMETURE À GLISSIÈRE COMPORTANT CELUI-CI

(43) Date of publication of application: 15.07.2015
(73) Proprietor: YKK Corporation, Tokyo 101-8642 (JP)
(72) Inventor: MIZUMOTO, Kazuya, Kurobe-shi Toyama 938-8601 (JP); NARA, Tatsurou, Kurobe-shi Toyama 938-8601 (JP)
(74) Representative: Leinweber & Zimmermann
(86) International application number: PCT/JP2012/072773
(87) International publication number: WO 2014/038045

(56) References cited:
- EP-A1- 0 960 910
- EP-A1- 1 916 278
- EP-A1- 2 479 219
- WO-A1-01/21711
- WO-A1-03/066956
- WO-A1-2005/014123
- WO-A1-2009/065627
- WO-A2-2012/049252
- JP-A- H1 170 588
- JP-A- H01 216 825
- JP-A- H10 243 805
- JP-A- 2001 158 858
- JP-A- 2003 047 506
- JP-A- 2003 219 903
- JP-A- 2005 160 667
- JP-A- 2008 075 077
- JP-A- 2009 040 808
- US-A- 3 936 413
- US-A1- 2003 152 762
- US-B1- 6 383 622

## Description

### Technical Field

The present invention relates to a molded component for slide fasteners such as a slider, a top end stop and a bottom end stop. The present invention also relates to a slide fastener comprising the molded component for slide fasteners.

### Background Art

A slide fastener is an opening and closing device for an article utilized in not only daily necessities such as clothing, bags, shoes and general merchandise but also in industrial goods such as a water tank, a fishing net and a space suit.

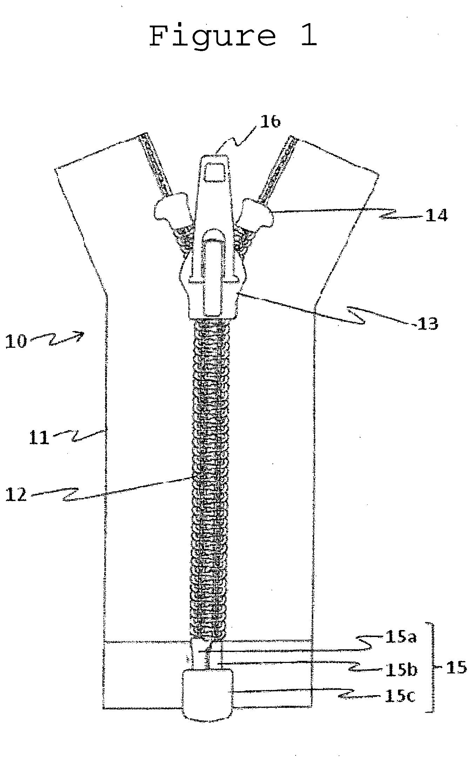

In Figure 1, the constitution of a typical slide fastener is shown, and the slide fastener 10 is mainly composed of three parts: a pair of long tapes 11, a number of elements 12 which are engaging parts of the fastener sewn on along one side edge of each tape, and a slider 13 to control opening and closing of the fastener by engaging and separating the elements 12. In addition, a top end stop 14 and an opening device 15 can be provided to prevent dropping off of the slider 13, and a pull tab 16 can be attached on the front face of the slider 13. The opening device 15 can be composed of an insert pin 15a and a box body 15c with a box pin 15b. The slider 13 releases engagement between elements 12, while being moved to the opening device 15 provided at the bottom parts of the long tapes 11, and then, the insert pin 15a is pulled out from the box body 15c to separate each tape 11.

In a fastener the elements of which are made of a resin, among the components of the slide fastener, the elements, the slider, the top end and bottom end stops, and the opening device are typically molded components manufactured by means of injection molding, and it is known that these components can be manufactured using a polyester resin and/or a polyamide resin as a material. And then, in some cases, these molded components may be required to be dyed in a desired color in order to enhance design.

In this respect, Japanese Patent No. 4517277 (Patent Literature 1) describes an invention directed toward dyeing cloth and a slide fastener composed of components made of a resin so that the both have the same apparent color tone when dyeing the both in the same bath. The patent publication discloses a component for slide fasteners composed of a resin composition, the resin composition comprising an ingredient (A) and at least one ingredient selected from the group consisting of (B), (C), (D) and (E), the component for slide fasteners having a satin-finished surface with a ten-point average surface roughness of 7-200 µm, and the ingredients (A), (B), (C), (D) and (E) being as follows:
(A) a polyester resin and/or a polyamide resin;
(B) a polyolefin-based polymer, a polyester-based polymer or an acryl-based polymer having a glass transition temperature of 0°C or below dispersed as a domain having a mean dispersed particle size of 0.1-2 µm in a matrix of (A);
(C) at least one inorganic compound selected from the group consisting of titanium compounds, zinc compounds and silicon compounds;
(D) at least one fibrous reinforcing material from the group consisting of glass fiber, an acicular wollastonite and aramid fiber;
(E) at least one mold-releasing agent selected from the group consisting of silicone compounds, higher aliphatic acid ester compounds and higher aliphatic acid salt compounds.

According to Patent Literature 1, it is stated that the effect of the satin-finished surface is evaluated by gloss difference or brightness difference between the mirror surface and the satin-finished surface and satin finish-processing giving a brightness difference from the cloth of 10 or less, preferably 8 or less is utilized. In addition, it is stated that a satin-finished surface having a ten-point average surface roughness, preferably, of 7-200 µm, and particularly, of 10-150 µm is made in order to reduce the brightness difference. In the example section, results of dyeing molded polyester articles which were satin finish-processed and cloth in the same bath are shown and it is stated that the molded articles having a predetermined ten-point average surface roughness exhibited a close color tone to that of the cloth upon dyeing in the same bath as the cloth.

Various polyamide resin compositions are known in the art:
A glass reinforced thermoplastic molding material pigmented with inorganic pigments is disclosed in Patent Literature 2 (US 3,936,413 A), Patent Literature 3 (WO 2009/065627 A1) teaches a gamma radiation sterilizable, reinforced polymer composition, and a stain- or dye-resistant article comprising a polymer composition is disclosed in Patent Literature 4 (WO 2012/049252 A2). Patent Literature 5 (EP 2 479 219 A1), Patent Literature 6 (EP 0 960 910 A1), Patent Literature 7 (EP 1 916 278 A1) and Patent Literature 8 (WO 01/21711 A1) teach flame-retardant polyamide resin compositions. A slide fastener manufactured from regenerated synthetic resin products is disclosed in Patent Literature 9 (EP 0 899 071), and a slider comprising a fiber-reinforced resin is disclosed in Patent Literature 10 (US 6,383,022 B1). Patent Literature 11 (US 2003/152762 A1) teaches a resin composition for a slide fastener including polyester, such as PET.

### Citation List

### Patent Literature

Patent Literature 1: Japanese Patent No. 4517277
Patent Literature 2: US 3,936,413 A
Patent Literature 3: WO 2009/065627 A1
Patent Literature 4: WO 2012/049252 A2
Patent Literature 5: EP 2 479 219 A1
Patent Literature 6: EP 0 960 910 A1
Patent Literature 7: EP 1 916 278 A1
Patent Literature 8: WO 01/21711 A1
Patent Literature 9: EP 0 899 071
Patent Literature 10: US 6,383,622 B1
Patent Literature 11: US 2003/152762 A1

### Summary of Invention

### Technical Problem

Patent Literature 1 focuses on controlling the color tone upon dyeing molded products made of a resin and cloth in the same bath, and is insufficient in a study from the viewpoint of rigidity, strength and color reproducibility which are important in consideration of utility of the components for slide fasteners.

Although Patent Literature 1 describes to the effect that addition of a fibrous reinforcing material is effective for attaining high rigidity and high strength, Patent Literature 1 neither specifically discloses an example employing the fibrous reinforcing material such as glass fiber nor specifically describes a study concerning the rigidity and the strength based on an example. The results of the investigation by the present inventors have found existence of a problem that when a higher concentration of a fibrous reinforcing material is used in a polyester resin, the interface between the resin and the fiber has a larger area, leading to a lower strength due to interfacial debonding. In addition, there also exists a problem that polyester resins are considerably hydrolyzed during dyeing, thereby easily leading to deterioration of strength after dyeing.

Although Patent Literature 1 also teaches that a component for slide fasteners can be manufactured using a polyamide resin as a material, on the other hand, polyamides have a problem to easily cause yellowing, thereby lacking color reproducibility upon dyeing, and thus have been thought to be unsuitable for use in dyed products. Indeed, Patent Literature 1 also does not specifically disclose use of a polyamide resin in an example.

Accordingly, it is difficult to conceive a molded component for slide fasteners having high strength, high rigidity and color reproducibility at the same time based on the teaching in Patent Literature 1. The present invention has been created in view of the above-described situation and one of the subjects of the present invention is to provide a molded component for slide fasteners excellent in color reproducibility, while retaining high strength and high rigidity. In addition, another subject of the present invention is to provide a slide fastener comprising such a molded component for slide fasteners.

### Solution to Problem

The present inventors have intensively studied in order to solve the subjects described above, and consequently, first found that use of a polyamide resin is effective to intend coexistence of strength and rigidity. And then, it has been found that lack of the color reproducibility due to yellowing, which is a defect of polyamide resins, can be solved by using a pigment having predetermined levels of hardness and refractive index.

The present invention has been accomplished on the basis of the findings described above, and in one aspect, is a molded component for slide fasteners made of a polyamide resin composition, the polyamide resin composition comprising a polyamide resin having a melting point of 210°C or higher and lower than 310°C; a pigment having a Mohs hardness of 4 or less and a refractive index of 2 or more in a content of 0.5% by mass or more and less than 5% by mass; and reinforcing fiber, wherein the content of the reinforcing fiber in the polyamide resin composition is 50-70% by mass.

In an embodiment of the molded component for slide fasteners according to the present invention, the median size of the pigment is 0.1-5.0 µm.

In still another embodiment of the molded component for slide fasteners according to the present invention, the reinforcing fiber is one or more selected from the group consisting of glass fiber, carbon fiber and aramid fiber.

In yet another embodiment of the molded component for slide fasteners according to the present invention, the pigment is one or more selected from the group consisting of zinc sulfide and antimony oxide.

In yet another embodiment of the molded component for slide fasteners according to the present invention, the ten-point average surface roughness is 6 µm or less.

In yet another embodiment of the molded component for slide fasteners according to the present invention, the molded component for slide fasteners is dyed.

In another aspect, the present invention is a slide fastener comprising the molded component for slide fasteners according to the present invention.

### Advantageous Effect of Invention

According to the present invention, a molded component for slide fasteners having high strength and high rigidity and excellent in color reproducibility can be obtained.

### Brief Description of Drawing

Figure 1 is a front view showing an example of constitution of a slide fastener.

### Description of Embodiments

### (1. Polyamide resin)

The molded component for slide fasteners according to the present invention uses a polyamide resin composition as a material. The polyamide resin usable in the present invention is not particularly limited, but polyamides have different melting points depending on molecular structure thereof, and the higher melting point a polyamide resin has, the more the molding temperature thereof is raised, thereby easily causing yellowing. Therefore, a polyamide resin having a melting point below 310°C is preferably used, more preferably a polyamide resin having a melting point of 305°C or below is used, and still more preferably a polyamide resin having a melting point of 300°C or below is used. In addition, since a polyamide resin with a lower melting point has a less number of the amide linkage per unit molecular structure and has a more flexible chain, thereby tending to have lower strength and rigidity, a polyamide resin having a melting point of 210°C or above is preferably used, more preferably a polyamide resin having a melting point of 240°C or above is used, and still more preferably a polyamide resin having a melting point of 250°C or above is used.

In the present invention, the melting point of the polyamide resin is defined as the peak top temperature of the endothermic peak when the endothermic quantity is measured by a DSC (differential scanning calorimeter). When a plurality of polyamide resins are used, the melting point is defined as the peak top temperature of the endothermic peak of the highest temperature side.

A polyamide resin is obtained by copolycondensation of a diamine and a dicarboxylic acid, polycondensation of an ω-aminoacid, ring-opening polymerization of a lactam and the like. The diamine includes, for example, straight-chain or branched-chain aliphatic diamines, such as ethylenediamine, propylenediamine, butylenediamine, hexamethylenediamine, 2-methylpropanediamine, 3-methylpropanediamine, octamethylenediamine, decanediamine and dodecanediamine; aromatic diamines, such as meta-xylylenediamine, para-xylylenediamine, meta-phenylenediamine and para-phenylenediamine; alicyclic diamines, such as isophoronediamine, 2-aminomethylpiperidine, 4-aminomethylpiperidine, 4,4'-diaminodicyclohexylenemethane, 4,4'-diamino-3,3'-dimethyldicyclohexylenemethane, 1,3-di(4-piperidyl)-propane, 1,2-diaminocyclohexane, 1,3-diaminocyclohexane, 1,4-diaminocyclohexane, N-aminopropylpiperazine, 4,4'-diaminodicyclohexylenepropane, 1,2-bis(aminomethyl)cyclohexane, 1,3-bis(aminomethyl)cyclohexane and 1,4-bis(aminopropyl)piperazine. The dicarboxylic acid includes, for example, straight-chain or branched-chain aliphatic dicarboxylic acids, such as succinic acid, propanedioic acid, butanedioic acid, pentanedioic acid, adipic acid, heptanedioic acid, octanedioic acid, nonanedioic acid, decanedioic acid, dodecanedioic acid, undecanedioic acid, dimer acid and hydrogenated dimer acid; aromatic dicarboxylic acids, such as phthalic acid, terephthalic acid, isophthalic acid, naphthalenedicarboxylic acid, 2-chloroterephthalic acid, 2-methylterephthalic acid, 5-methylisophthalic acid, and 5-sodium sulfoisophthalic acid and 1,5-naphthalenedicarboxylic acid; dicarboxylic acids having a non-aromatic cyclic group, such as 1,4-cyclohexanedicarboxylic acid, 1,2-cyclohexanedicarboxylic acid, 1,3-cyclohexanedicarboxylic acid, tetrahydrophthalic acid, tetrahydrophthalic anhydride, hexahydrophthalic acid, hexahydrophthalic anhydride, 3-methyl-1,2,3,6-tetrahydrophthalic anhydride, 4-methyl-1,2,3,6-tetrahydrophthalic anhydride, 3-methyl-1,2,3,6-tetrahydrophthalic acid, 4-methyl-1,2,3,6-tetrahydrophthalic acid, 3-methyl-hexahydrophthalic anhydride, 4-methylhexahydrophthalic anhydride, 3-methylhexahydrophthalic acid, and 4-methylhexahydrophthalic acid. The ω-aminoacids include, for example, 6-aminohexanoic acid, 11-aminoundecanoic acid, 12-aminododecanoic acid, 4-piperidinecarboxylic acid, 3-piperidinecarboxylic acid and 2-piperidinecarboxylic acid. The lactam includes ε-caprolactam, undecanelactam, and lauryllactam.

Specific examples of the polyamide include polycaproamide (nylon 6), polydodecaneamide (nylon 12), polytetramethyleneadipamide (nylon 46), polyhexamethyleneadipamide (nylon 66), polyundecamethyleneadipamide (nylon 116), polymetaxylyleneadipamide (nylon MXD6), polyparaxylyleneadipamide (nylon PXD6), polytetramethylenesebacamide (nylon 410), polyhexamethylenesebacamide (nylon 610), polydecamethyleneadipamide (nylon 106), polydecamethylenesebacamide (nylon 1010), polyhexamethylenedodecamide (nylon 612), polydecamethylenedodecamide (nylon 1012), polyhexamethyleneisophthalamide (nylon 6I), polyhexamethyleneterephthalamide (nylon 6T), polybis(3-methyl-4-aminohexyl)methaneterephthalamide (nylon PACMT), polybis(3-methyl-4-aminohexyl)methaneisophthalamide (nylon PACMI), polybis(3-methyl-4-aminohexyl)methanedodecamide (nylon PACM12), polybis(3-methyl-4-aminohexyl)methanetetradecamide (nylon PACM14), polytetramethyleneterephthalamide (nylon 4T), polypentamethyleneterephthalamide (nylon 5T), poly-2-methylpentamethyleneterephthalamide (nylon M-5T), polyhexamethylenehexahydroterephthalamide (nylon 6T(H)), poly2-methyl-octamethyleneterephthalamide, polynonamethyleneterephthalamide (nylon 9T), polydecamethyleneterephthalamide (nylon 10T), polyundecamethyleneterephthalamide (nylon 11T), polydodecamethyleneterephthalamide (nylon 12T), polybis(3-methyl-4-aminohexyl)methaneterephthalamide (nylon PACMT), polybis(3-methyl-4-aminohexyl)methaneisophthalamide (nylon PACMI), polybis(3-methyl-4-aminohexyl)methanedodecamide (nylon PACM12), and polybis(3-methyl-4-aminohexyl)methanetetradecamide (nylon PACM14). These may be used singly or in a mixture of two or more.

Furthermore, a copolymer obtained by any combination of the repeating units of polyamides also can be used. Such polyamide copolymer includes, though not restrictive, caprolactam/hexamethyleneadipamide copolymer (nylon 6/6,6), hexamethyleneadipamide/caprolactam copolymer (nylon 6,6/6), and hexamethyleneadipamide/hexamethylene-azelamide copolymer (nylon 6,6/6,9).

### (2. Reinforcing fiber)

Strength and rigidity of the molded component for slide fasteners can be enhanced by incorporating reinforcing fiber into the polyamide resin composition. By surface treatment with a silane coupling agent, a titanate coupling agent, an aluminate coupling agent or the like, a polyamide can be expected to have a higher compatibility with the reinforcing fiber than a polyester, and therefore the polyamide can provide a high rigidity without spoiling the strength even when the reinforcing fiber is added in a large amount. Specifically, the concentration of the reinforcing fiber in the polyamide resin composition to be the material for the component for slide fasteners according to the present invention can be 50% by mass or more, and further, even 60% or more by mass. However, since an excessively high concentration of the reinforcing fiber deteriorates the moldability and also decreases the strength, the concentration of the reinforcing fiber in the polyamide resin composition is preferably 70% by mass or less. Although Patent Literature 1 describes that 200 parts by mass of a fibrous reinforcing material at maximum can be compounded to 100 parts by mass of a polyester resin, compounding of the fibrous reinforcing material in such a high concentration never provides the useful moldability and strength. According to the study by the present inventors, when using a polyester resin, the fibrous reinforcing material up to only approximately 80 parts by mass can provide the useful moldability and strength to 100 parts by mass of the polyester.

The reinforcing fiber used in the present invention may include, but not limited to, for example, organic fiber such as carbon fiber and aramid fiber, as well as inorganic fiber such as glass fiber, an acicular wollastonite and whiskers (examples: calcium titanate whisker, calcium carbonate whisker, aluminum borate whisker). Preferably, any one or more selected from glass fiber, aramid fiber and carbon fiber are used, and glass fiber is more preferable in that the strength can be enhanced, while retaining flowability at a certain level or higher. These may be used singly or in combination of two or more.

Preferably, the mean diameter of the reinforcing fibers before compounding with a resin is approximately 3-20 µm, and more preferably approximately 5-12 µm. Preferably, the mean fiber length thereof before compounding with a resin is approximately 1 mm-10 mm, and more preferably approximately 3 mm-6 mm. It is noted that the fiber diameter refers to a diameter obtained by determining the cross sectional area of the reinforcing fiber and then calculating a corresponding diameter of a perfect circle having the same cross sectional area. Preferably, the aspect ratio, i.e., the mean fiber diameter : the mean fiber length, of the reinforcing fiber before compounding with a resin is 1:50-3:10000, and more preferably 1:300-1:1200. Typically, a mean fiber length of the reinforcing fiber is reduced to 1/10-1/20 of the initial fiber length after compounding with a resin and molding, and for example, is 0.1-1 mm, and typically 0.1-0.5 mm.

### (3. Pigment)

Although polyamide resins easily cause yellowing, thereby exhibiting low color reproducibility, the color reproducibility can be enhanced by adding a pigment. On the other hand, addition of the pigment in a high concentration is not preferred because the pigment added in an increased amount may reduce the strength or deteriorate the color reproducibility due to an excessive whiteness. Thus, in the present invention, the color reproducibility is ensured, while the pigment content being suppressed, by using a pigment with a high whiteness having a refractive index of 2 or more, and preferably 2.5 or more. In addition, a pigment with a high hardness easily breaks the reinforcing fiber in compounding them, and this adversely affects the strength of the molded product. Thus, in the present invention, high strength is ensured by using a pigment having a Mohs hardness of 4 or less and preferably 3.5 or less. Examples of the pigment satisfying such conditions include zinc sulfide and antimony oxide, and zinc sulfide is preferred from the viewpoint of safety.

Preferably, the content of the pigment in the polyamide resin composition is 0.5% or more by mass, and more preferably 1.0% or more by mass from the viewpoint of the color reproducibility. Also, the content of the pigment in the polyamide resin composition is preferably below 5.0% by mass, and more preferably 4.5% or less by mass from the viewpoint of dark color dyeability. When using an excessive amount of the pigment, too much white color makes, for example, red to pink, thereby being difficult to express dark colors.

Pigments are generally granular or powdery, and an excessively large particle size thereof reduces opacifying properties, thereby lowering a whiteness per unit amount of addition. Therefore, the median size of the pigment is preferably 5.0 µm or less, and more preferably 3.0 µm or less. On the other hand, an excessively small particle size of the pigment causes agglomeration via a van der Waals force, and therefore the median size is preferably 0.1 µm or more, and more preferably 0.2 µm or more. The median size of the pigment is determined by a laser diffraction method according to JIS 8825-1: 2001.

Additionally, commonly used additives, such as a heat stabilizer, a weathering agent, a hydrolysis-resistant agent and other pigment, may be added into the polyamide resin composition such that the total content of these additives is, for example, 10.0% or less by mass. When other pigment is added, it is desirable that the above-described pigment having the predetermined Mohs hardness and refractive index accounts for 90% or more by mass, preferably 95% by mass, and still more preferably 100% by mass of the total pigments.

### (4. Molded component for slide fasteners)

The molded component for slide fasteners is not particularly limited so long as it is a molded component composing a slide fastener, but typically includes an element, a slider, a pull tab, a top end stop and a bottom end stop, and an opening device. At least one of these molded components for slide fasteners can be manufactured using the resin composition according to the present invention, and particularly, the resin composition according to the present invention can be suitably used as the material for the slider and the pull tab. In addition, a variety of slide fasteners comprising the molded component for slide fasteners can be manufactured. The type of the element, which is an engaging part of the slide fastener, is not particularly limited, but includes, for example, a coil fastener, an extrusion fastener and an injection fastener.

Description is provided with respect to an example of the method for manufacturing a molded component for slide fasteners using the resin composition according to the present invention. First, a polyamide, which is an ingredient of the resin composition, reinforcing fiber, a pigment and the like are sufficiently kneaded so as not to cause bias of the ingredients. Kneading can be carried out using a single screw extruder, a twin screw extruder, a kneader or the like. The kneaded resin composition is injection-molded utilizing a mold having a predetermined shape to complete a variety of the molded components for slide fasteners. The injection molding conditions are not particularly limited, but a twin screw extruder can be suitably used. In the case of glass fiber in a high concentration, it is preferred to compound the glass fiber with a resin in a molten state using a side feeder in terms of productivity. With respect to the injection molding conditions, from the viewpoint that high productivity can be ensured without deterioration, the cylinder temperature is preferably set to a range of 280-320°C, and the mold temperature is preferably set to, for example, 90-130°C, which is higher than usual.

Preferably, the surface of the molded component for slide fasteners according to the present invention may have a ten-point average roughness of 6 µm or less, for example, 0.1-6 µm to enhance the gloss feeling. The ten-point average roughness is determined using a noncontact surface roughness measuring instrument using a laser microscope.

The resulting molded component for slide fasteners can be subjected to dyeing. The method for dyeing is not particularly limited, but dip dyeing and printing are representative. With respect to the dye, though not restrictive, premetallized dyes, acidic dyes, thren dyes and disperse dyes are suitable, and among others, acidic dyes can be particularly suitably used because of good dyeing affinity and fastness.

### Examples

Hereinafter, Examples of the present invention will be presented, but these are provided in order for a better understanding of the present invention and advantages thereof, and not intended that the present invention is limited thereto.

As the polyamide resins, nylon 66 (polyhexamethyleneadipamide), nylon 6 (polycaproamide), nylon 9T (polynonamethyleneterephthalamide), and nylon 6T (polyhexamethyleneterephthalamide), each of which has a melting point (Tm) shown in Table 4, were used. The melting point of each polyamide resin was determined according to the method previously described using DSC EXSTAR6000 (made by Seiko Instruments Inc.), under the conditions of 5-10 mg sample weight, under N₂ gas atmosphere, and 10°C/min heating rate.

As the reinforcing fiber, glass fiber (mean fiber diameter: 11 µm, mean fiber length before molding: 3 mm, mean fiber length after molding: 0.25 mm) was used.

As the pigments, zinc sulfide (ZnS), antimony oxide (Sb₂O₃), titanium oxide (TiO₂), zinc oxide (ZnO), and talc, each of which has a Mohs hardness and a refractive index shown in Table 4, were used. In addition, the median size of each pigment was dry-measured according to the method previously described using a laser diffraction/scattering measuring instrument (MT3300 made by Nikkiso Co., LTD.). The results are shown in Table 1.

**[Table 1]**

| | Median size (µm) |
|---|---|
| TiO₂ | 0.2 |
| ZnO | 0.6 |
| ZnS | 0.3 |
| Sb₂O₃ | 1.2 |
| Talc | 3.0 |

Each above-described polyamide resin, glass fiber and pigment were kneaded using a twin screw extruder (TEM-18SS made by Toshiba Machine Co., Ltd.) so as to give each compounding ratio (mass basis) shown in Table 4. With respect to the conditions of the extruder, each set of the cylinder temperatures shown in Table 2 was employed for each base material. In addition, the screw rotational frequency and the discharge per hour were set to 150 rpm and 3 kg/h, respectively, and the glass fiber only was side-fed. Each molten resin was extruded in a strand form from the die, cooled to be solidified in a cooling water bath, and then cut by a pelletizer to give a pellet of each resin composition. The pellet of each resin composition was injection-molded to form specimens of 80 × 20 × 4 mm for each Example or Comparative Example.

**[Table 2]**

| | Cylinder temperature (hopper side) | Cylinder temperature (die side) |
|---|---|---|
| Nylon 6 | 250°C | 230°C |
| Nylon 66 | 280°C | 260°C |
| Nylon 9T | 300°C | 300°C |
| Nylon 6T | 320°C | 320°C |

The flexural modulus (rigidity), the flexural stress (strength), the ten-point average surface roughness, and the color reproducibility were evaluated for each resulting specimen. The results are shown in Table 4.

The flexural modulus and the flexural stress were determined according to JIS K7171: 2008 under the conditions shown in Table 3 below.

**[Table 3]**

| | |
|---|---|
| Test rate | 2 mm/min |
| Inter-fulcrum distance L | 64 mm |
| Indenter radius R1 | 5 mm |
| Fulcrum radius R2 | 5 mm |

With respect to the ten-point average surface roughness, the surface roughness (ten-point average roughness) in a 100 µ × 100 µ region was measured with a 100 times magnifying lens using a confocal laser microscope (VK-8500 made by Keyence Corp.), after effecting the automated inclination correction.

With respect to the color reproducibility, the L*, a* and b* were measured for each specimen before and after dyeing according to JIS Z8729: 2004 (color specification), and then the color reproducibility was evaluated as "good" in the case of satisfying all of the four criteria below or as "bad" in the case of not satisfying all of the four criteria. As the dyeing machine, a pot-type dyeing machine was used and dyeing was carried out under the conditions of a dye concentration of 1.0% by mass, a dyeing temperature of 100°C, and a dyeing time of 20°C.
(1) The brightness (L*) of the base color before dyeing is 80 or more (insufficient whiteness when less than 80).
(2) The chromaticity (a*, b*) of the base color before dyeing is -15 to 15 (not having particular color tones).
(3) The a* after dyeing with a red acidic dye (Tectilon Red 2B) is 40 or more (brilliantly colored).
(4) The b* after dyeing with a blue acidic dye (Tectilon Blue 4R) is -25 or less (brilliantly colored).

**[Table 4-1]**

| | | Example 1 | Example 2 | Example 3 | Example 4 | Example 5 | Example 6 | Example 7 | Example 8 |
|---|---|---|---|---|---|---|---|---|---|
| Polymer | Nylon 66 (Tm = 265°C) | 40% | 40% | 40% | | | 40% | 50% | 30% |
| | Nylon 6 (Tm = 220°C) | | | | 40% | | | | |
| | Nylon 9T (Tm = 305°C) | | | | | 40% | | | |
| | Nylon 6T (Tm = 310°C) | | | | | | | | |
| Glass fiber ingredient | | 60% | 60% | 60% | 60% | 60% | 60% | 50% | 70% |
| Pigment | ZnS | 0.50% | 2.00% | | 2.00% | 2.00% | 4.00% | 2.00% | 2.00% |
| | Sb2O3 | | | 2.00% | | | | | |
| | TiO2 | | | | | | | | |
| | ZnO | | | | | | | | |
| | Talc | | | | | | | | |
| Pigment specification | Mohs hardness | 3 | 3 | 2.5 | 3 | 3 | 3 | 3 | 3 |
| | Refractive index | 2.4 | 2.4 | 2.2 | 2.4 | 2.4 | 2.4 | 2.4 | 2.4 |
| | | | | | | | | | |
| Strength test | Flexural modulus (GPa) | 21 | 21.2 | 21.7 | 19.9 | 20.8 | 21.1 | 16.5 | 23.4 |
| | Flexural stress (MPa) | 417 | 423 | 412 | 380 | 368 | 419 | 392 | 411 |
| | Ten-point average surface roughness Rz (µm) | 2.06 | 1.49 | 1.84 | 0.87 | 2.24 | 3.42 | 1.54 | 5.75 |
| Color reproducibility | L*a*b* Color system (D₆₅ light source) | good | good | good | good | good | good | good | good |

**[Table 4-2]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Polymer | Nylon 66 (Tm = 265°C) | 40% | 40% | 40% | 40% | 40% | | 55% |
| | Nylon 6 (Tm = 220°C) | | | | | | | |
| | Nylon 9T (Tm = 305°C) | | | | | | | |
| | Nylon 6T (Tm = 310°C) | | | | | | 50% | |
| Glass fiber ingredient | | 60% | 60% | 60% | 60% | 60% | 50% | 45% |
| Pigment | ZnS | 5.00% | | | | | 2.00% | 2.00% |
| | Sb2O3 | | | | | | | |
| | TiO2 | | | 1.00% | | | | |
| | ZnO | | | | 2.00% | | | |
| | Talc | | | | | 5.00% | | |
| Pigment specification | Mohs hardness | 3 | N/A | 7 | 4.5 | 1 | 3 | 3 |
| | Refractive index | 2.4 | N/A | 2.7 | 2 | 1.6 | 2.4 | 2.4 |
| | | | | | | | | |
| Strength test | Flexural modulus GPa | 21.1 | 20.6 | 20.4 | 20.3 | 22 | 17.4 | 14.4 |
| | Flexural stress MPa | 417 | 428 | 317 | 323 | 345 | 388 | 374 |
| | Ten-point average surface roughness Rz (µm) | 4.05 | 0.41 | 2.26 | 1.34 | 1.00 | 1.55 | 0.97 |
| Color reproducibility | L*a*b* Color system (D₆₅ light source) | bad | bad | good | good | bad | bad | good |
| Remarks | | The brilliant color cannot be produced. | The whiteness is insufficient. The brilliant color cannot be produced. | The strength is low. | The strength is low. | The whiteness is insufficient. The brilliant color cannot be produced. | Yellowing occurs. | The rigidity is insufficient. |

### Reference Signs List

- 10: Slide fastener
- 11: Long tape
- 12: Element
- 13: Slider
- 14: Top end stop
- 15: Opening device
- 16: Pull tab

## Claims

1. A molded component for slide fasteners made of a polyamide resin composition, the polyamide resin composition comprising:
a polyamide resin;
a pigment; and
a reinforcing fiber,
**characterized in that**
the polyamide resin has a melting point of 210°C or higher and lower than 310°C,
the pigment has a Mohs hardness of 4 or less and a refractive index of 2 or more and is comprised in a content of 0.5 % by mass or more and less than 5 % by mass and
the reinforcing fiber is comprised in a content of 50-70% by mass.

2. The molded component for slide fasteners according to Claim 1 wherein the median size of the pigment is 0.1-5.0 µm.

3. The molded component for slide fasteners according to Claim 1 or 2 wherein the reinforcing fiber is one or more selected from the group consisting of glass fiber, carbon fiber and aramid fiber.

4. The molded component for slide fasteners according to any one of Claims 1-3 wherein the pigment is one or more selected from the group consisting of zinc sulfide and antimony oxide.

5. The molded component for slide fasteners according to any one of Claims 1-4 wherein the ten-point average surface roughness is 6 µm or less.

6. The molded component for slide fasteners according to any one of Claims 1-5 wherein the molded component is dyed.

7. A slide fastener comprising the molded component for slide fasteners according to any one of Claims 1-6.

## Patentansprüche

1. Formteil für Reißverschlüsse aus einer Polyamidharz-Zusammensetzung, wobei die Polyamidharz-Zusammensetzung Folgendes umfasst:
ein Polyamidharz;
ein Pigment; und
eine Verstärkungsfaser,
**dadurch gekennzeichnet, dass**
das Polyamidharz einen Schmelzpunkt von 210 °C oder höher und niedriger als 310 °C aufweist,
das Pigment eine Mohs-Härte von 4 oder weniger und einen Brechungsindex von 2 oder mehr aufweist und in einem Gehalt von 0,5 Massen-% oder mehr und weniger als 5 Massen-% enthalten ist und
die Verstärkungsfaser in einem Gehalt von 50-70 Massen-% enthalten ist.

2. Formteil für Reißverschlüsse nach Anspruch 1, wobei die mittlere Größe des Pigments 0,1-5,0 µm beträgt.

3. Formteil für Reißverschlüsse nach Anspruch 1 oder 2, wobei die Verstärkungsfaser eine oder mehrere aus der Gruppe bestehend aus Glasfaser, Kohlefaser und Aramidfaser ausgewählte ist.

4. Formteil für Reißverschlüsse nach einem der Ansprüche 1 bis 3, wobei das Pigment ein oder mehrere aus der Gruppe bestehend aus Zinks ulfid und Antimonoxid ausgewähltes ist.

5. Formteil für Reißverschlüsse nach einem der Ansprüche 1 bis 4, wobei die durchschnittliche Zehn-Punkt-Oberffächenrauheit 6 µm oder weniger beträgt.

6. Formteil für Reißverschlüsse nach einem der Ansprüche 1 bis 5, wobei das Formteil gefärbt ist.

7. Reißverschluss, der das Formteil für Reißverschlüsse nach einem der Ansprüche 1-6 umfasst.

## Revendications

1. Élément moulé pour fermetures à glissière, constitué d'une composition de résine de polyamide, la composition de résine de polyamide comprenant :
une résine de polyamide ;
un pigment ; et
une fibre de renfort,
**caractérisé en ce que**
la résine de polyamide présente un point de fusion de 210 °C ou plus et de moins de 310 °C,
le pigment présente une dureté Mohs inférieure ou égale à 4 et un indice de réfraction supérieur ou égal à 2, et représente entre 0,5 % en masse ou plus et moins de 5 % en masse et
la fibre de renfort apparaît à hauteur de 50 à 70 % en masse.

2. Élément moulé pour fermetures à glissière selon la revendication 1, dans lequel la taille médiane du pigment est comprise entre 0,1 et 5,0 µm.

3. Élément moulé pour fermetures à glissière selon la revendication 1 ou 2, dans lequel la fibre de renfort est au moins une fibre choisie dans l'ensemble constitué de fibre de verre, de fibre de carbone et de fibre d'aramide.

4. Élément moulé pour fermetures à glissière selon l'une quelconque des revendications 1 à 3, dans lequel le pigment est au moins un pigment choisi dans l'ensemble constitué de sulfure de zinc et d'oxyde d'antimoine.

5. Élément moulé pour fermetures à glissière selon l'une quelconque des revendications 1 à 4, dans lequel la rugosité superficielle moyenne en dix points est inférieure ou égale à 6 µm.

6. Élément moulé pour fermetures à glissière selon l'une quelconque des revendications 1 à 5, dans lequel l'élément moulé est teint.

7. Fermeture à glissière comprenant l'élément moulé pour fermetures à glissière selon l'une quelconque des revendications 1 à 6.
